# EUROPEAN PATENT SPECIFICATION

(11) **EP 0 549 191 B1**
(45) Date of publication and mention of the grant of the patent: **12.11.1997**
(21) Application number: 92311201.5
(22) Date of filing: 09.12.1992
(51) Int. Cl.: F23C 7/00

(54) **Gas turbine combustors**
Gasturbinenbrennkammer
Chambre de combustion pour turbine à gaz

(30) Priority: 23.12.1991 US 811731
(43) Date of publication of application: 30.06.1993
(73) Proprietor: GENERAL ELECTRIC COMPANY, Schenectady, NY 12345 (US)
(72) Inventor: Fric, Thomas Frank, Schenectady, New York 12308 (US); Kuwata, Masayoshi (NMN), Schenectady, New York 12019 (US)
(74) Representative: Goode, Ian Roy

(56) References cited:
- US-A- 4 835 962
- PATENT ABSTRACTS OF JAPAN vol. 14, no. 198 (M-965) 23 April 1990 & JP-A-02 040 417 (CENTRAL RES. INST. OF ELECTRIC) 9 February 1990

## Description

### Background of the Invention

This invention relates generally to minimizing NOₓ production in gas turbine combustors and more particularly concerns reducing NOₓ emissions by mixing a small portion of combustion air into the fuel lines upstream of the premixer section of the combustor. Document Patent Abstracts of Japan, vol 14, No 198 (M-965) 23rd April 1990 severals a gas turbine combustor wherein a small portion of combustion air is premixed into the fuel line upstream of the combustion chamber.

Hydrocarbons are widely used as fuels in gas turbine combustors. Because of its projected widespread availability, natural gas is an especially attractive fuel for stationary power generating systems. However, the emissions from the combustion of hydrocarbons lead to many environmental problems such as acid rain, ozone depletion and the "greenhouse" effect. Combustion by-products which pollute the atmosphere are required to be minimized as part of a growing concern for the quality of the environment. Oxides of nitrogen (NOₓ) are particularly undesirable by-products.

During combustion, NOₓ is formed in part by reactions which occur between atmospheric nitrogen and oxygen atoms. Because of the high activation energy of these reactions, NOₓ formation is not significant at temperatures below approximately 1800 K to 1900 K. The requirement of high temperatures has led to water or steam injection for NOₓ control in conventional (non-premixed) combustors. In this approach, the injected water or steam absorbs heat, reduces the peak temperatures below the NOₓ-forming threshold, and so reduces NOₓ formation. However, this approach is expensive in terms of water or steam, can cause corrosion, and can increase carbon monoxide emission levels. Another common approach, injecting ammonia-based thermal deNOₓ into the exhaust stream, minimizes NOₓ, but this method is very expensive in terms of capital equipment and process ammonia.

Lean premixed combustion of gaseous hydrocarbons is an attractive approach because it offers relatively clean combustion without the need for post-combustion treatment of the exhaust. Typically, lean premixed combustion is accomplished by premixing fuel and air just upstream of flame stabilization (in a section of the combustor called the premixer section) to form a mixture on the lean side of stoichiometric. The effect of premixing is to reduce and hopefully minimize the temperature at which the mixture burns, thus reducing NOₓ production which is temperature sensitive. Generally, the leaner the mixture, the lower the combustion temperature will be.

The premixer sections of combustors used in industry typically fall short of completely mixing the gaseous fuel and air, thus resulting in higher levels of NOₓ. Efforts to improve the "mixedness" of fuel and air within the premixer by altering geometries and flow patterns have been attempted. However practical designs are constrained by such factors as allowable pressure drop limits and space limitations. Despite improvements in premixer designs, some incomplete mixing generally exists. Incomplete mixing leads to nonuniformities and fluctuations in fuel concentration levels during lean premixed combustion. Such nonuniformities and fluctuations cause increased NOₓ production because NOₓ production increases nonlinearly with the fuel concentration. For example, a fluctuation above the average fuel concentration will add more NOₓ than an equal fluctuation below the average fuel concentration will reduce. The net effect is that fluctuations produce more NOₓ than if combustion was performed at a constant fuel concentration. Similarly, nonuniform mean profiles contribute to greater NOₓ.

### Summary of the Invention

The present invention seeks to reduce NOₓ emissions by minimizing fluctuations and nonuniformities in the fuel concentration levels of fuel-air combustion mixtures.

More specifically, the present invention seeks to reduce NOₓ emissions in lean premixed combustion by mixing a small portion of air with the fuel upstream of the premixing stage.

In addition, the present invention seeks to provide NOₓ reduction in lean premixed combustion that is useful regardless of the combustor design and does not require major modification of the combustor.

According to a first aspect of the invention, there is provided a gas turbine apparatus comprising a combustor including a combustion section and a premix section upstream from the combustion section and separated from the combustion section by a flame stabiliser; an air intake and a fuel line whereby said premix section includes first and second inlets, said fuel line being connected to said first inlet and said air intake being connected to said second inlet; and means for diverting a portion of the air intake from the air intake and injecting it into said fuel line upstream of the premix section whereby air is mixed with the fuel prior to injection into the premix section of the combustor to decrease the production of NOx.

According to a second aspect of the invention, there is provided a method of reducing NOx emissions from a gas turbine combustor having a premix section into which premixed fuel and air and remaining air are injected for further mixing, characterized by premixing approximately one to ten percent of the total amount of air into the fuel prior to injection of the fuel into the premixer section.

Thus the present invention used a process referred to as "head start partial premixing". Head start partial premixing reduces NOₓ emission levels from a gas turbine combustor by mixing a small portion of air (typically around one to ten percent of the total combustion air supply) into the fuel line prior to injection into the combustor. Although a non-premixing combustor is possible, the present invention preferably provides a gas turbine apparatus comprising a combustor having a premixer section for mixing fuel and air. A fuel line is connected to a first inlet for supplying fuel to the premixer section, and a source of air is connected to a second inlet of the premixer section. A means for injecting air into the fuel line upstream of said premixer section comprises means for diverting a small portion of air from the source of air to the fuel line.

The present invention will be useful with any combustor that has imperfect mixing, regardless of its design. Furthermore, the present invention does not require expensive modifications of the combustor. The invention does not pose a safety problem because the head start partial premixing occurs relatively far upstream from the combustor and the fuel-air mixture in the fuel line is kept very rich (beyond the flammability limit) and therefore is not combustible.

### Description of the Drawings

The invention will now be described in greater detail, by way of example, with reference to the drawings, in which:-
Figure 1 is a schematic view of a conventional combustor for premixed combustion;
Figure 2 is a schematic view of the combustor of the present invention;
Figure 3 is a graph comparing experimental mean fuel concentrations;
Figure 4 is a graph comparing experimental "unmixedness" levels; and
Figure 5 is a graph comparing experimental NOₓ emission levels.

### Detailed Description of the Invention

The present invention relies on the concept that mixing a small portion of air with fuel prior to injection into the premixer section of a combustor minimizes NOₓ production by reducing fluctuations and nonuniformities in the net mean fuel concentration level of the mixture of the premixer section. The theory behind this concept will be shown by comparing a typical premixed combustor with the combustor of the present invention.

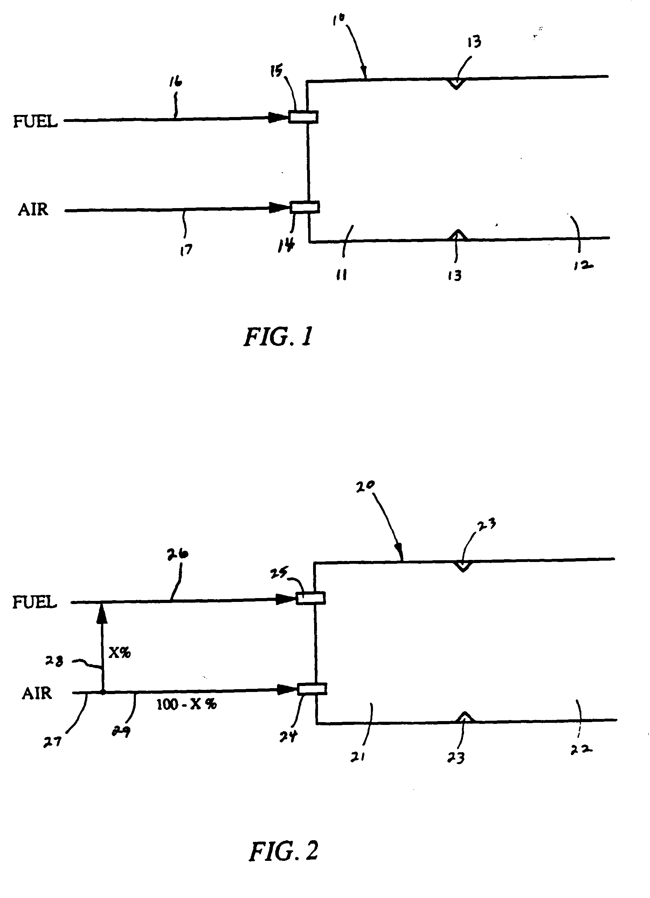

Figure 1 shows a schematic of a conventional combustor 10 for carrying out lean premixed combustion. The combustor 10 has a premixer section 11 where injected fuel and air are mixed and a combustion section 12 where the fuel-air mixture is burned. A flame stabilizer 13 separates the combustion and premixer sections. Two input ports 14 and 15 provide inlets to the premixer section 11. These ports can be configured in any well known manner. A fuel line 16 is connected to the second input port 15 for supplying fuel to the premixer section. A second line 17 is connected to the first input port 14. The second line 17 provides air to the premixer section 11 through the first input port.

The volumetric fuel concentration of a stream delivered through the first input port 14 is given by C₁ and the volumetric fuel concentration of a stream delivered through the second input port 15 is given by C₂. Since the stream through first input port 14 is entirely air and the stream through the second input port is entirely fuel, C₁ = 0 and C₂ = 1. The net mean fuel concentration of the mixture of the two streams is given by C, where${\text{C}}_{\text{1}} {\text{≤ C ≤ C}}_{\text{2}} \text{.}$

The maximum variance, σ$\frac{\text{2}}{\text{max}}$, in the net mean fuel concentration, C, of the mixture of the premixer section is given by:${\text{σ}}_{\text{max}}^{\text{2}} {\text{= (C}}_{\text{2}} {\text{- C) (C - C}}_{\text{1}} \text{).}$ The variance is an indication of the magnitude of the fluctuations in fuel-air concentration. As an example, consider a combustion process where the fuel is methane. For methane, the net mean fuel concentration is given by:$\text{C} \text{=} \frac{\text{φ}}{\text{(φ+9.52)}}$ where φ is the fuel-air equivalence ratio. For the case where the fuel-air equivalence ratio is 0.5, C will be approximately 0.05 and solving equation 1 gives σ$\frac{\text{2}}{\text{max}}$ = 0.0475.

Turning now to Figure 2, the combustor 20 of the present invention is shown schematically. Like the combustor 10 of Figure 1, the combustor 20 has a premixer section 21 where injected fuel and air are mixed and a combustion section 22 where the fuel-air mixture is burned. A flame stabilizer 23 separates the combustion and premixer sections. Two input ports 24 and 25 provide inlets to the premixer section 21. A fuel line 26 is connected to the second input port 25 for supplying fuel to the premixer section. A second line 27 is connected to the first input port 24. The second line 27 is split into two branches 28 and 29. The first branch 28 delivers a small percentage, X, of the total air from line 27 to the fuel line 26, thereby causing the small portion of air to be mixed with the fuel prior to injection into the premixer section 21. The remainder of the air from the line 27 is directly delivered to the premixer section via the second branch 29 which is connected to the first input port 24.

Now reconsider the above example of combusting methane at a fuel-air equivalence ratio of 0.5 where head start premixing is used in the combustor 20. Assume that the volume of air diverted from the second line 27 to the fuel line 26 is five percent of the total. Now the stream through first input port 24 is still entirely air, but the stream through the second input port is a mixture of fuel and air. Since, for an equivalence ratio of 0.5, the net mean fuel concentration, C, is approximately 0.05, the mixture of fuel and air injected through the second input port 25 is half fuel and half air. Thus, C₁ = 0 and C₂ = 0.5 and equation 1 now gives σ$\frac{\text{2}}{\text{max}}$ = 0.0225. It can be seen from this comparison that head start partial premixing has reduced the maximum variance by more than 50 percent which means fluctuations and nonuniformities are reduced.

The amount of air injected into the fuel line is constrained in part by safety considerations. Ideally, as much air as possible is added because more air lowers the value of the fuel concentration, C₂ through the second input port and the maximum variance possible is directly related to the value of C₂. However, the fuel-air mixture in the fuel line 26 must be maintained very rich, beyond its flammability limit, or else combustion could occur in the fuel line; adding too much air to the fuel line could produce a flammable mixture. Other considerations include practical aspects of the system design such as required changes in fuel lines and fuel injectors and any additional air compression needed prior to injecting diverted air into the fuel line. Generally, an amount in the range of approximately one to ten percent of the total air volume is considered practical.

The first branch 28 should be arranged to inject the small portion of air into the fuel line 26 at a point far upstream of the combustor 20. Not only does the distance from the combustor help prevent combustion in the fuel line, but the considerable distance the fuel-air mixture must travel through the fuel line results in thorough mixing.

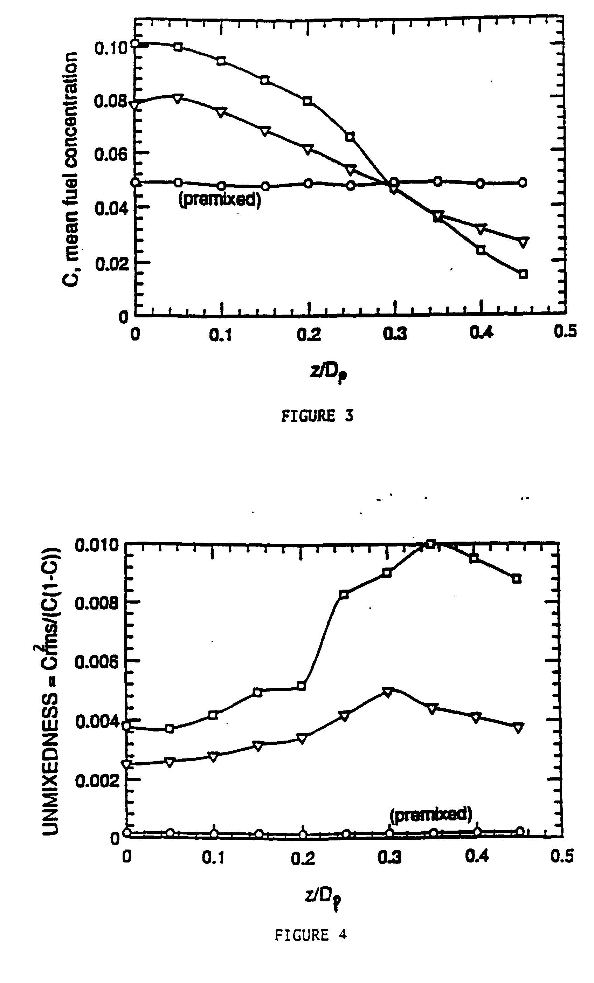

Figures 3-5 show the results of experiments carried out to test the concept of the present invention. A first experiment was conducted on a laboratory-scale device consisting of a premixer tube and a combustion tube joined together at respective ends. A center jet was coaxially disposed in the distal end of the premixer tube. A supply of air was provided to the premixer tube from a point upstream of the center jet. The juncture of the two tubes served as the flame stabilization location. During operation, the mean and fluctuating fuel concentrations were measured at the exit plane of the premixer and NOₓ emissions data were taken with a Beckman NOₓ analyzer located downstream in the combustion tube.

Two combustion processes were conducted. In both instances methane was used for the fuel and the equivalence ratio was 0.5. In the first run methane was injected through the center jet and an air flow was provided in the premixer tube. Next, five percent by volume of the air flow was diverted from the premixer tube into the jet. The center jet was then essentially a 50-50 mix of air and methane. This represents the head start partial premixing concept of the present invention. For a reference, data representing an essentially perfectly mixed case were collected. (Note that the laboratory technique used to create the ideal premixed data could not be realized in an actual gas turbine apparatus.) In Figures 3-5, circles correspond to data for the ideal premixed case, squares correspond to data from the first run, and triangles correspond to data from the run using head start partial premixing.

Figure 3 shows a graph plotting the volumetric mean fuel concentration at the end of the premixer tube against the radial distance, z, from the longitudinal axis of the premixer tube, nondimensionalized by the diameter of the premixer tube, Dₚ. The concentration profile where a fuel-air mixture was injected through the center jet was more uniform and closer to the ideal mixed case than the concentration profile where only fuel was injected through the center jet.

Figure 4 shows a graph plotting the "unmixedness" level against the radial distance, z, from the longitudinal axis of the premixer tube, nondimensionalized by the diameter of the premixer tube, Dₚ. The "unmixedness" level is defined as the variance of fuel-air concentration nondimensionalized by the value (1-C)C. (Note that the most unmixed case is such that the variance equals (1-C)C. Therefore, an unmixedness of 1 would correspond to the most unmixed case, and an unmixedness of 0 would correspond to the most mixed case.) The graph shows that the combustion run using head start partial premixing had a lower unmixedness level than combustion without head start partial premixing.

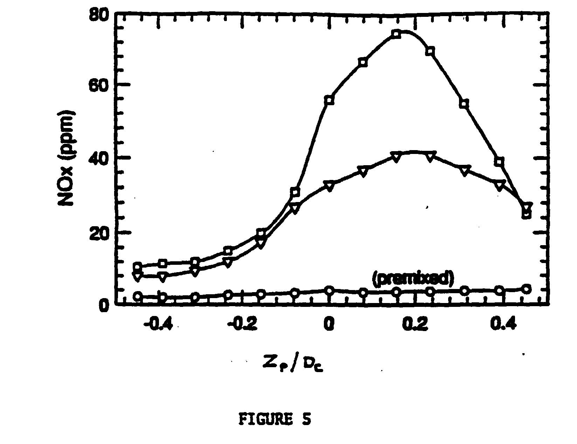

Figure 5 plots NOₓ production in parts per million against the radial position of the probe, Zp, nondimensionalized by the diameter of the combustion tube, D_{c}. Here, the graph shows that using head start partial premixing provides a substantial improvement in NOₓ emissions.

A second test procedure was conducted on a full-scale, single-can combustor. The fuel used was natural gas; the air-fuel mass ratio was about 1 (volume ratio of about 0.56), corresponding to a diversion of about two percent of the combustion air flow. The results showed that NOₓ emission reductions of about 20-25 percent from an initial level of 30 parts per million were possible.

The foregoing has described reducing NOₓ production in gas turbine combustors by injecting a small portion of air into the fuel supply prior to injection into the premixer section of the combustor. The present invention can be implemented without significant modification to the combustor and is useful regardless of the combustor design.

## Claims

1. A gas turbine apparatus comprising a combustor (20) including a combustion section (22) and a premix section (21) upstream from the combustion section and separated from the combustion section by a flame stabiliser (13,23); an air intake (27) and a fuel line (26) whereby said premix section includes first and second inlets (25,24), said fuel line (26) being connected to said first inlet (25) and said air intake (27) being connected to said second inlet (24); and
means (28) for diverting a portion of the air intake from the air intake (27) and injecting it into said fuel line (26) upstream of the premix section (21) whereby air is mixed with the fuel prior to injection into the premix section of the combustor to decrease the production of NOx.

2. The gas turbine apparatus recited in Claim 1, characterized by said air intake having first and second branches (28,29), said first branch being the injection means (28) connected between the air intake (27) and the fuel line (26) for injecting a portion of the air from the air intake (27) into said fuel line (26); and
the second branch (29) being connected to the second inlet (24) for delivering the remaining portion of the air from said air intake (27) into said premix section second inlet (24).

3. A method of reducing NOx emissions from a gas apparatus according to claim 1 or 2 into which premixed fuel and air (26) and remaining air (27) are injected for further mixing, whereby approximately one to ten percent of the total amount of air is premixed into the fuel prior to injection of the fuel into the premixer section (21).

## Patentansprüche

1. Gasturbineneinrichtung enthaltend eine Brennkammer (20) mit einem Verbrennungsabschnitt (22) und einem Vormischabschnitt (21) stromaufwärts von dem Verbrennungsabschnitt und getrennt von dem Verbrennungsabschnitt durch einen Flammstabilisierer (13, 23), einen Lufteinlaß (27) und eine Brennstoffleitung (26), wobei der Vormischabschnitt erste und zweite Einlässe (25, 24) aufweist und die Brennstoffleitung (26) mit dem ersten Einlaß (25) und der Lufteinlaß (27) mit dem zweiten Einlaß (24) verbunden sind, und
eine Einrichtung (28) zum Ableiten eines Teils der Lufteinströmung von dem Lufteinlaß (27) und zum Injizieren der Luft in die Brennstoffleitung (26) stromaufwärts von dem Vormischabschnitt (21), wodurch vor der Injektion in den Vormischabschnitt der Brennkammer Luft mit Brennstoff gemischt wird, um die Erzeugung von NOₓ zu verkleinern.

2. Gasturbineneinrichtung nach Anspruch 1, dadurch gekennzeichnet, daß die Lufteinströmung erste und zweite Zweige (28, 29) aufweist, wobei der erste Zweig die Injektionseinrichtung (28) ist, die zwischen dem Lufteinlaß (27) und der Brennstoffleitung (26) verbunden ist zum Injizieren eines Teils der Luft aus dem Lufteinlaß (27) in die Brennstoffleitung (26), und
der zweite Zweig (29) mit dem zweiten Einlaß (24) verbunden ist zum Liefern des verbleibenden Teils der Luft aus dem Lufteinlaß (27) in den zweiten Einlaß (24) des Vormischabschnittes.

3. Verfahren zum Verringern von NOₓ Emissionen aus einer Gasturbineneinrichtung nach Anspruch 1, in die vorgemischter Brennstoff und Luft (26) und verbleibende Luft (27) für eine weitere Mischung injiziert werden, wobei etwa eins bis zehn Prozent der gesamten Luftmenge in den Brennstoff vorgemischt werden vor einer Injektion des Brennstoffes in den Vormischabschnitt (21).

## Revendications

1. Dispositif de turbine à gaz comprenant une chambre de combustion (20) qui contient une zone de combustion (22) et une zone de prémélange (21) placée en amont de la zone de combustion et séparée de la zone de combustion par un stabilisateur de flamme (13, 23), une admission d'air (27) et un conduit de carburant (26) de sorte que ladite zone de prémélange comprend des première et deuxième entrées (25, 24), ledit conduit de carburant (26) étant couplé à ladite première entrée (25) et ladite admission d'air (27) étant couplée à ladite deuxième entrée (24), et un moyen (28) pour détourner une partie de l'air arrivant par l'admission d'air (27) et l'injecter dans ledit conduit de carburant (26) en amont de la zone de prémélange (21), si bien que l'air se mélange au carburant avant injection dans la zone de prémélange de la chambre de combustion pour diminuer la production de NOx.

2. Dispositif de turbine à gaz selon la revendication 1, caractérisé par le fait que ladite admission d'air comporte des première et deuxième branches (28, 29), ladite première branche étant le moyen d'injection (28) couplé entre l'admission d'air (27) et le conduit de carburant (26) pour injecter une partie de l'air provenant de l'admission d'air (27) dans ledit conduit de carburant (26), et la deuxième branche (29) étant couplée à la deuxième entrée (24) pour délivrer la partie restante de l'air de ladite admission d'air (27) dans ladite deuxième entrée (24) de la zone de prémélange.

3. Procédé de réduction des émissions de NOx par un dispositif de turbine à gaz conforme à la revendication 1, dans lequel de l'air et du carburant prémélangés (26) et l'air restant (27) sont injectés en vue d'être davantage mélangés, si bien qu'environ un à dix pourcents de la quantité totale d'air est prémélangé dans le carburant avant injection du carburant dans la zone de prémélange (21).
